# EUROPEAN PATENT SPECIFICATION

(11) **EP 3 519 893 B1**
(45) Date of publication and mention of the grant of the patent: **14.04.2021**
(21) Application number: 17856881.2
(22) Date of filing: 25.09.2017
(51) Int. Cl.: G03B 27/32, G03B 27/52, H04N 1/14, H04N 1/04, H04N 1/06, H04N 1/00, G03B 15/00, G03B 17/56

(54) **A SCANNER, SPECIFICALLY FOR SCANNING ANTIQUE BOOKS, AND A METHOD OF SCANNING**
SCANNER, INSBESONDERE ZUM SCANNEN ANTIKER BÜCHER, UND VERFAHREN ZUM SCANNEN
SCANNEUR, EN PARTICULIER DESTINÉ À NUMÉRISER PAR BALAYAGE DES LIVRES ANCIENS, ET PROCÉDÉ DE NUMÉRISATION PAR BALAYAGE

(30) Priority: 28.09.2016 PL 41890716
(43) Date of publication of application: 07.08.2019
(73) Proprietor: Lipik, Jacek, 32-048 Jerzmanowice (PL)
(72) Inventor: Lipik, Jacek, 32-048 Jerzmanowice (PL)
(74) Representative: Lampart, Jerzy
(86) International application number: PCT/PL2017/000092
(87) International publication number: WO 2018/063013

(56) References cited:
- EP-A1- 0 164 713
- WO-A1-2016/024348
- US-A- 3 724 948
- US-A- 4 567 528
- US-A- 5 585 926
- US-A1- 2005 002 069
- US-A1- 2009 180 085

## Description

The invention relates to a scanner, specifically to one for scanning antique books, and to a novel method of scanning.

Specialised book scanners, such as Zeutchel 12002v, and the so-called book cradles that hold the book in an open position, are used for the scanning of antique books with wide stitching margins or with limited opening angles. Scanners of this type, equipped with a book cradle, enable opening the halves of a stitch bound antique book to a right or obtuse angle. In devices of this type the book is set in place, its position is determined by means of a laser rangefinder, and the opposite pages of the book are held in place during scanning by means of a transparent pressure plate, and both pages are scanned from top to bottom by means of a linear scanner.

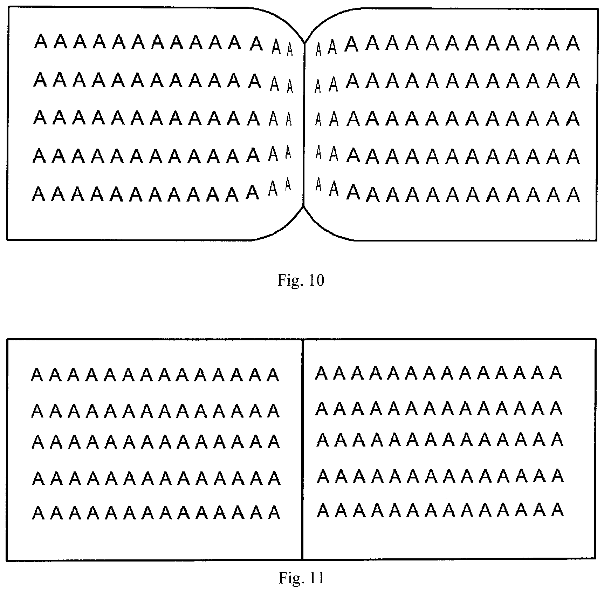

The UK patent application GB 2287546 and the German utility model specification DE8207305 describe a device for reproducing books, wherein the device includes a table and a camera positioned above the table, wherein a fully open book is pressed with a glass cover, and wherein in order to compensate for the difference in the thickness of the halves of the open book the book is supported from below by a set of two supporting surfaces of individually adjustable height matching the thickness of each half of the book. In the case of antique books such wide opening of the book and the pressure exerted by the glass cover are highly undesirable, harmful or even destructive. On the other hand, if there is no pressure on the book, or if such pressure is low, the image of the scanned book may look like the one shown in Fig. 10.

The German patent application DE102004058769 describes a device and method of scanning documents, wherein the device is equipped with a frame and movable camera. The device also has a photosensitive sensor and an optical system with mirrors that can take one of two positions. The method of scanning an original document with the mobile camera module comprises the following steps: in first position first section of document is imaged on sensor via first optical path and in second position second section of document is imaged on sensor via second optical path. These sections overlap. However, in this method the proportions are not retained, and the width of the image changes with the distance. Scanning is carried out at a constant angle.

The US2009180085 application discloses the imaging system which has a vacuum platen positioned below a light source. An imager receives light reflected from a document located on the platen. A stepper motor controls position of the imager in two dimensions relative to the platen such that the imager operates to sequentially capture several sections of the document in large-format document imaging mode and the entirety of the document in multi-document imaging mode.

The application WO2016024348 discloses the image reading apparatus which includes a first placement unit, a second placement unit, a first reading unit, a second reading unit, a rotating mechanism, and a switch-over mechanism that switches over the first placement unit and the second placement unit between a horizontal state and an inclined state. The rotating mechanism rotates the first reading unit and the second reading unit, so that, in the horizontal state, the first image reading unit and the second image reading unit read a document placed on the first placement unit and a document placed on the second placement unit respectively, while in the inclined state, the process of document reading is repeated as in the horizontal state.

The US4567528 discloses the scanner which has a housing with a down facing wedge section having windows in two adjoining faces which can be positioned with the ridge of the wedge in the gutter of a partially opened book. A lamp is positioned within the housing for illuminating pages positioned against the two windows. A scanning camera scans in turn each of the two pages which are visible through the windows to generate electrical video signals corresponding to the information carried out by each of the pages in turn. A V-shaped trough in which the book will rest has an angle corresponding to the included angle of the wedge shaped housing and is aligned with the housing so that a partially opened book resting on the trough can be sandwiched between the windowed faces of the wedge and the sides of the trough. Devices are provided for effecting relative movement between the housing and the trough to permit movement apart (to enable a book to be positioned in or removed from the trough and pages to be turned) and movement together (to sandwich the book for scanning).

The US3724948 patent application discloses the overhead rail supporting structure for photographic apparatus which is supported on a long spanning member. Said spanning member rests at its opposed ends on two piers each comprising four spaced posts joined by cross beams adjacent to their top and base. The composite structure affords a rigid and stable support for the head such that its film platen and lenses remain coaxially aligned with the subject holder through said spatial adjustments.

The patent application EP0164713 discloses reading device comprising a document stand having a document placing surface and an optical reading means for optically reading the surface of a document placed on the document placing surface. The device further comprises a guide member defining a guide passage extending in a direction toward and away from the document placing surface, an oscillating member mounted such that its one end can reciprocate freely along the document placing surface in a predetermined scanning direction and in a direction opposite to it and the other end can freely reciprocate along the guide passage, and a driving source for oscillating the oscillating member which is capable of moving said one end of the oscillating member at a substantially constant speed in the scanning direction. The optical reading means is provided in the oscillating member. While said one end of the oscillating member is moved in the scanning direction at said substantially constant speed, the optical distance between the surface of the document placed on the document placing surface and the optical reading means is maintained substantially constant, and the optical reading means scans the surface of the document.

The US2005002069 patent application relates to a device and method for scanning an original copy using a camera containing a line sensor. Means are provided that, during the scanning process, hold, in an essentially constant manner, the optical path length between the camera and the line that is to be currently scanned, whereby the camera executes a lifting and rotational movement.

The US5585926 patent application discloses document reading apparatus capable of rectifying a picked up image data of documents . In a document reading apparatus capable of picking up image data of documents from above position thereof, curvature of the documents is detected by measuring the height of the document surface. In accordance with the detected curvature, interpolative and expansional processing to the picked up image data is executed. Distorted image data of the documents due to the curvature is thereby corrected.

All of the above-mentioned solutions do not satisfactorily solve the problem of deteriorating the quality of the scanned image in the case of unevenness and convexity of the scanned object.

The invention is defined by the scanner of the independent claim 1 and the method claim 3. An advantageous embodiment is defined in the dependent claim 2.

Further aspects of the present invention will become apparent from the following description with reference to the attached drawings.

Scanning antique books requires a specific approach and the use of solutions that minimally interfere with the scanned object. Valuable and very old documents are often stitch bound or creased. Less critical parameters of the process include scanning speed and mechanical complexity of the device, while the more critical include quality and contactless nature of the process. The scanner, irrespective of the arrangement of the scanned object, allows guiding the linear camera at a right or very close to a right angle and at a constant distance to the surface of the region of the object being scanned at the given moment. The region of the object being scanned at the given moment is a rectangular section of the object (with a width of a pixel at the set resolution) subjected to digitization, that is mapping of the analog image of the object in digital form. With this scanning method, image distortion and many of the problems of the prior art methods are avoided. The image of the book in the proposed method, where no pressure is exerted on the pages of the book, looks as shown in Fig. 11. Unlike in prior art methods, to obtain a correct image without distortion there is no need to open the book fully. The opening angle of the object, the book, is confined only by camera accessibility, and it may be less than 90 degrees and different for each part of the book. Pressing the book with a glass panel is not required, either. No electronic flattening or corrective image processing is applied to achieve a correct image with no distortion. Likewise, no changing of the focal length of the lens is applied to correct the picture and obtain a correct and undistorted image. The image is created by one camera, thereby problems with calibrating several cameras and assembling the entire image are avoided.

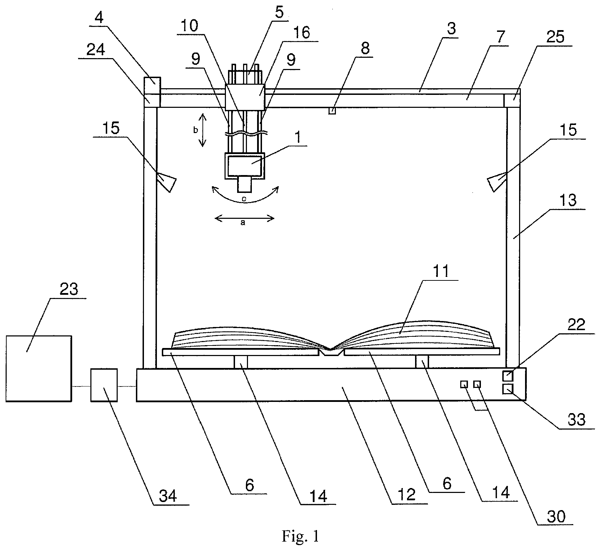

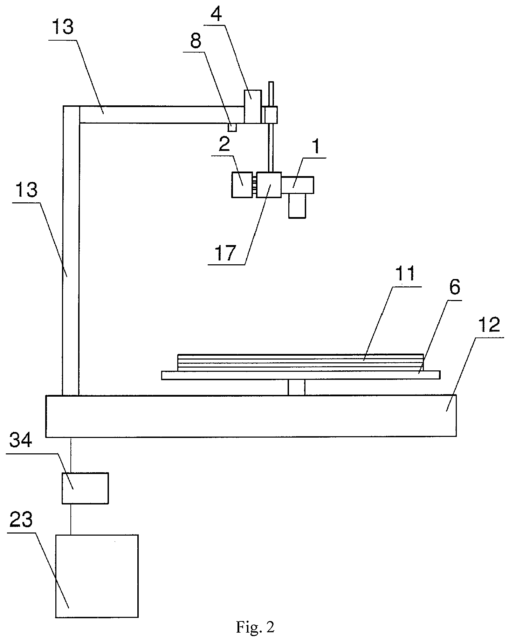

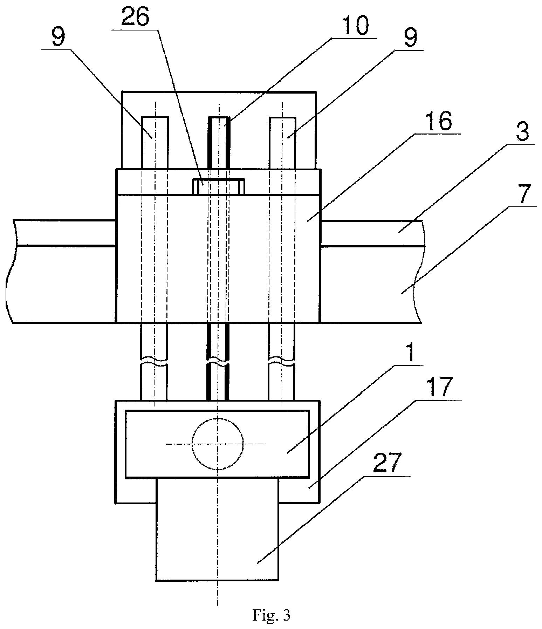

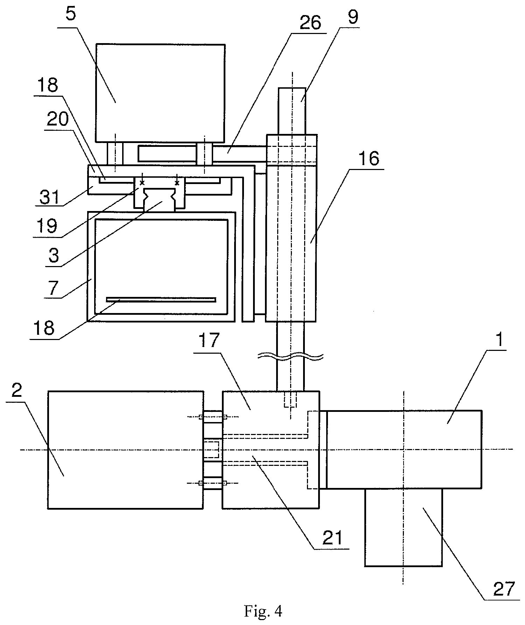

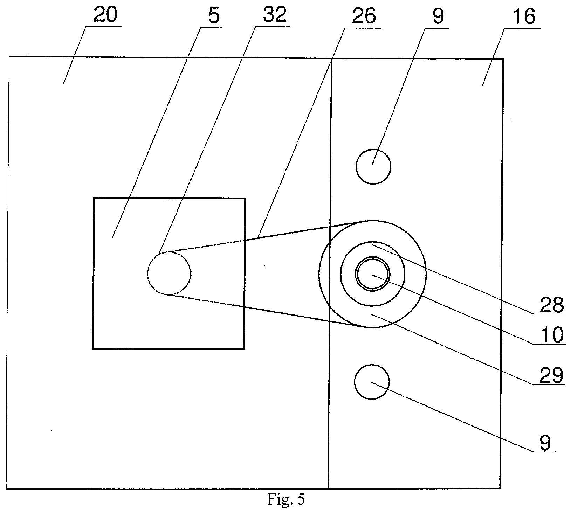

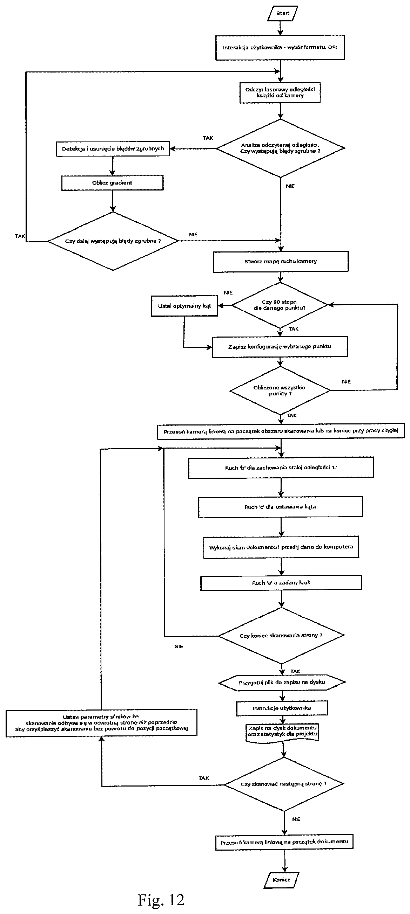

The subject of the invention is illustrated by an embodiment shown in drawings, of which Fig. 1 shows the front view of the scanner, Fig. 2 shows the side view, Fig. 3 shows the front view of the lowering mechanism of the camera, Fig. 4 shows the side view, Fig. 5 shows the top view, Fig. 6 shows a diagram of camera movement when the book is open at an angle of 180 degrees, Fig. 7 shows a magnified portion of the diagram of camera movement when the book is open at an angle of 180 degrees, Fig. 8 shows a diagram of camera movement when the book is open at an angle of 90 degrees, Fig. 9 shows a diagram of camera movement when the book is open at an angle of 120 degrees, Fig. 10 shows a reproduction of the book in a graphical format obtained using the prior art methods, Fig. 11 shows a reproduction of the book in graphical format obtained using the present method, and Fig. 12 shows scanner operation flowchart including camera movement for the scanned obj ect.

The scanner has a scanner housing 12 to which frame 13 is attached. The housing houses a mechanism for lifting and lowering two platens 6, left and right, on which the scanned object 11 rests. The movement of both halves is effected by means of guides 14 controlled by pushbuttons 30. Beam 7 is attached to the frame 13. A slide bearing 19 guide 3 and a stepper motor 4 are attached to the beam 7, the stepper motor 4 driving gear (toothed wheel) 24 via a transmission. To the opposite end of the beam 7 a bearing-supported freely rotating low speed gear 25 is attached. A toothed belt 18 is stretched between gears 24 and 25, the two ends of the toothed belt being attached to connector 20 by means of bracket 31. The slide bearing 19 moves on guide 3. The connector 20 is attached to the slide bearing 19. A guide 16 for lifting and lowering the linear camera 1 and a stepper motor 5 for driving a screw 10 via a toothed belt 26 are attached to connector 20. The motor 5, through the medium of the toothed belt 26, rotates a nut 28 installed in gear 29. When the nut 28 rotates, it lifts or lowers (depending on the sense of rotation) the screw 10. The screw 10 is attached to connector 17, to which slide shafts 9 and linear camera 1 with lens 27 and motor 2 are also attached. The purpose of the slide shafts 9, the bearings of which are installed in guide 16, is to stabilize the movement forced by screw 10. The connector 17 houses a bearing for shaft 21, to one end of which is attached the linear camera 1 with lens 27, and to the other end of which is attached motor 2.

Computer 23 controls are attached to longitudinal movement motor 4, to up-down movement motor 5 and to camera rotation motor 2. The controls 23 are also connected to lamps 15 which are turned on only during scanning, to rangefinder 8 of the linear camera 1.

The area of scanning and scanning resolution are set in the first place. The area of scanning is set either by selecting from a list a standardized format, e.g. ISO, or by marking the area on a preliminary low resolution high speed scan.

Within the indicated area of scanning an instrument for determining the scanning distance, a rangefinder, a distance meter, for instance a laser rangefinder 8, measures the distance between the object being scanned and the linear camera 1 along the entire length and width of the object being scanned. The rangefinder 8 transfers data to computer 23, where appropriate software forms the image of the scanned object 11. The computer software analyses the image obtained and creates a map of curvatures of the scanned object and determines the trajectory of the linear camera 1 by means of motors 2, 4, 5. Motor control signals are transmitted to the motors by means of controller 34.

After image analysis and determination of the trajectory (or the trajectory is generated in real time) the proper scanning of the object 11 commences. The linear camera 1 is positioned at the set distance from the object 11 and at an angle of 90 degrees to the surface of the object. The movement is effected by means of motors 2, 4, 5. The camera starts moving along the scanned object maintaining a constant speed t, constant distance L and constant angle equal to a right angle in relation to the surface of the object at any given moment.

After the entire surface of the object is scanned, usually a single page or two bound pages, motors 2, 4, 5 are stopped. The camera is then positioned at the start of scanning (start of page) or at the end of scanning in case of continuous scanning.

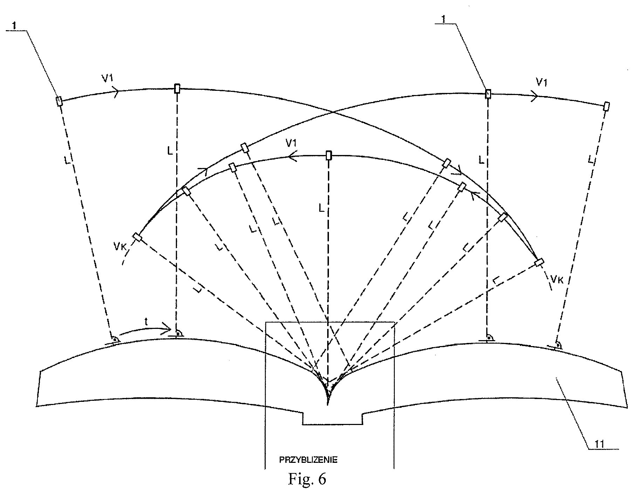

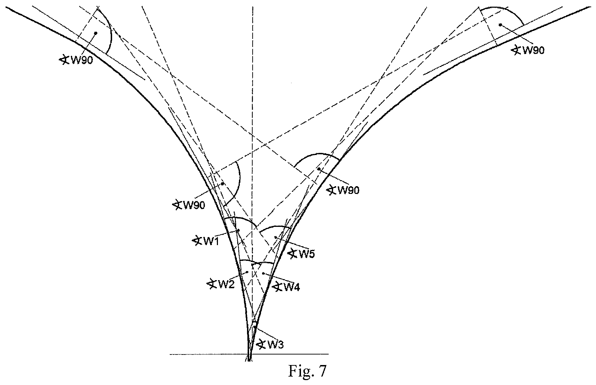

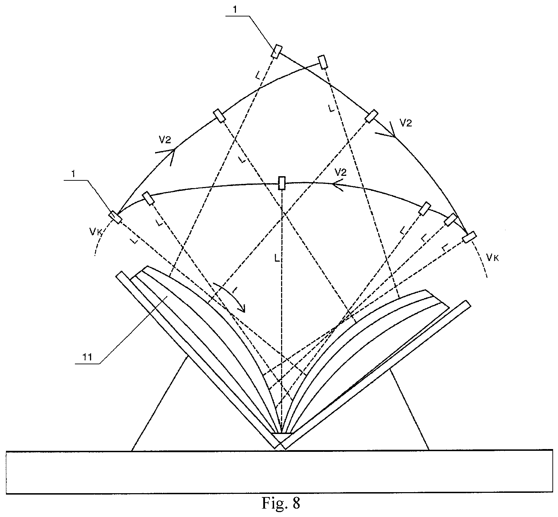

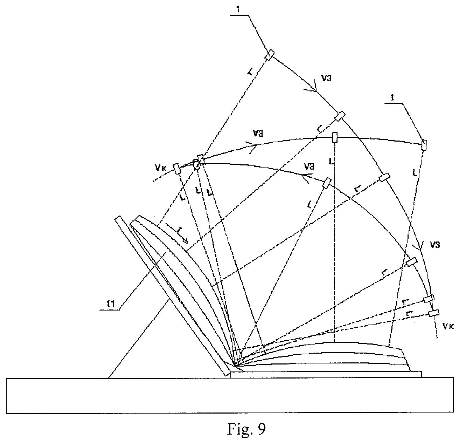

However, sometimes the linear camera 1 of the scanner is forced to perform relatively complex movements VI, V2, V3 to obtain a faithful image under much harder conditions. This happens when the book opening angle is small or when the page is creased or bulged. The complexity of the camera movement is illustrated in Figs. 6, 7, 8, 9. In this case the camera continues to be maintained at a right angle to the scanned object until the rangefinder determines that the distance has decreased drastically. This happens when the light beam of the rangefinder encounters a bulge in the adjacent page that was scanned before or is yet to be scanned. This initiates a change of the camera angle to one that is as close to a right angle as possible and yet enables further scanning of the current page without interference from the adjacent page. This is illustrated in Fig. 7 where angles W1, W2, W3, W4, W5 are smaller than the right angle W90. In other words, when at a given point on the "object map" the camera cannot view the object at an angle of 90 degrees (W90), it stops at section VK and the movement is changed to opposite direction. Controller 34 stops movement of the camera 1 and then changes its direction to the opposite within the VK section so that camera movement is smooth.

In this case, an angle (W1, W2) closest to the right angle is set to maintain the maximum possible perpendicularity to the object. The camera moves to the next page of the object and, like previously, the object is scanned at an angle close to the right angle (W3, W4), and when it becomes possible to attain again the perpendicularity of "camera viewing" of the object (book), the camera movement direction changes again to the opposite along the VK section and scanning of the page is continued until the end of the page is reached. Scanning ends when the end of the map of points is reached. The scanning of the next object starts at the point of termination of the scan of the previous object in continuous operation, otherwise the camera returns to the left edge.

The controller provided with computer software determines the movement of the camera head depending on the changing scanning conditions, opening angle of the book, book bulge, scanning range. Also, the speed and direction of the movement of the camera head over the scanned object (movement a) is determined in each case so that the speed t at the level of the scanned object 11 is constant. This speed is determined by the scanning resolution. The speed and direction of camera head movement over the scanned object is correlated with the lowering, lifting and rotation of the camera b, c and it is controlled by the controller 34 and computer software.

## Claims

1. A scanner, specifically for scanning antique books, containing a housing (12) that houses a lifting mechanism (6,14) on which the book rests, a frame (13) attached to the housing and supporting a camera (1) positioning mechanisms in the form of slide beam (7), toothed belts (18,26), gears (24,25) and motors (2,4,5) for moving the camera (1) over the book (11) to be scanned, the scanner being **characterized in that**:
The beam (7) is attached to the frame (13); A slide bearing guide (3) and a stepper motor (4) are attached to the beam (7);
The stepper motor (4) is connected to a transmission driving a toothed rotating wheel gear (24) attached to the one end of the beam (7), and wherein to the opposite end of the beam (7) a similar bearing-supported freely rotating gear (25) is attached, and wherein between the said gears (24, 25) runs a toothed belt (18) two ends of which are attached to a slide bearing (19) attached to a connector (20), the slide bearing (19) moving on the slide bearing guide (3) along a longitudinal axis over the book (11) to be scanned;
A guide (16) and a motor (5) are attached to the connector (20) in-between, wherein the motor (5) is linked to a screw (10) positioned in the guide (16) by means of a toothed belt (26) that forces a lifting or lowering movement of the screw along a vertical axis over the book (11) to be scanned, and wherein the bottom part of the screw (10) is attached to a connector (17), to which slide shafts (9) passing through the guide (16) are attached for stabilizing the movement forced by the screw;
The connector (17) houses a bearing for shaft (21), to one end of which is attached a linear camera (1), and
to the other end of which is attached a stepped motor (2) for rotating the camera (1);
the scanner further comprising:
A range finder (8) attached to the frame (13) and positioned for measuring the distance between the book being scanned and the linear camera along the entire length and width of the book (11);
A control means (23) connected to the range finder (8) and configured to determine a trajectory of the linear camera (1) for scanning the book (11) by using a book curvature map created from the data transferred by the range-finder (8), the control means (23) being further configured to scan the book (11) at a constant speed (t) by controlling the longitudinal movement motor (2), the up-down movement motor (4) and the camera rotation motor (5) via a controller (34) according to the determined trajectory maintaining the linear camera (1) at a constant distance and at a constant orthogonal angle in relation to the surface of the book (11) at any given moment.

2. The scanner according to claim 1 wherein the motor (5) is connected by means of toothed belt (26) to the screw (10) by a rotating nut (28) installed in gear (29)

3. A method of scanning antique books with the scanner of claim 1 moving the linear camera (1) over the book (11) to be scanned at a set speed dependent on the desired image resolution, wherein the movement of the linear camera (1) is determined by a trajectory set beforehand or during scanning by using the a rangefinder (8) and the control means (23), the method comprising the steps of :
Measuring the distance between the book (11) being scanned and the linear camera (1) along the entire length and width of the object being scanned with the range finder (8);
Transferring the range-finder data to the control means (23);
Forming an image of the scanned book (11) with the control means (23), Analysing the image formed and creating a map of curvatures of the scanned book (11) with the control means (23);
Determining the trajectory of the linear camera (1) for scanning the book (11) with the control means (23) by using the created map of curvatures of the book (11), wherein the determined scanning trajectory is configured to maintain the linear camera (1) positioned at a constant distance from the book (11) and
at a constant orthogonal angle to the surface of the book at any moment during scanning;
Transmitting control signals from the control means (23) to the longitudinal, vertical and rotation motors (2,4,5) by means of the controller (34) to scan the book (11) according to the determined trajectory and at a constant speed (t).

## Patentansprüche

1. Scanner, insbesondere zum Scannen von antiken Büchern, mit einem Gehäuse (12), in dem ein Hebemechanismus (6, 14) untergebracht ist, auf dem das Buch ruht, einem Rahmen (13), der an dem Gehäuse befestigt ist und eine Kamera (1) trägt, Positionierungsmechanismen in Form eines Gleitträgers (7), Zahnriemen (18, 26), Zahnräder (24, 25) und Motoren (2, 4, 5) zum Bewegen der Kamera (1) über das zu scannende Buch (11), wobei der Scanner **dadurch gekennzeichnet ist, dass**:
Der Träger (7) an dem Rahmen (13) befestigt ist; eine Gleitlagerführung (3) und ein Schrittmotor (4) an dem Träger (7) befestigt sind;
Der Schrittmotor (4) ist mit einem Getriebe verbunden, das ein Zahnradgetriebe (24) antreibt, das an dem einen Ende des Trägers (7) befestigt ist, und wobei an dem gegenüberliegenden Ende des Trägers (7) ein ähnliches lagergelagertes, frei drehendes Getriebe (25) befestigt ist, und wobei zwischen den Zahnrädern (24, 25) ein Zahnriemen (18) läuft, dessen beide Enden an einem Gleitlager (19) befestigt sind, das an einem Verbinder (20) angebracht ist, wobei sich das Gleitlager (19) auf der Gleitlagerführung (3) entlang einer Längsachse über das zu scannende Buch (11) bewegt; Eine Führung (16) und ein Motor (5) sind an dem Verbinder (20) dazwischen befestigt, wobei der Motor (5) mit einer Schraube (10) verbunden ist, die in der Führung (16) mittels eines Zahnriemens (26) positioniert ist, der eine Hebe- oder Senkbewegung der Schraube entlang einer vertikalen Achse über das zu scannende Buch (11) erzwingt, und wobei der untere Teil der Schraube (10) an einem Verbinder (17) befestigt ist, an dem durch die Führung (16) hindurchgehende Gleitwellen (9) zur Stabilisierung der durch die Schraube erzwungenen Bewegung befestigt sind;
Der Verbinder (17) beherbergt ein Lager für eine Welle (21), an deren einem Ende eine Zeilenkamera (1) befestigt ist und an deren anderem Ende ein Schrittmotor (2) zum Drehen der Kamera (1) befestigt ist; wobei der Scanner weiterhin umfasst:
Einen Entfernungsmesser (8), der an dem Rahmen (13) befestigt und so positioniert ist, dass er den Abstand zwischen dem zu scannenden Buch und der Zeilenkamera entlang der gesamten Länge und Breite des Buches (11) misst; eine Steuereinrichtung (23), die mit dem Entfernungsmesser (8) verbunden und so konfiguriert ist, dass sie eine Traj ektorie der Zeilenkamera (1) zum Abtasten des Buches (11) unter Verwendung einer Buchkrümmungskarte bestimmt, die aus den von dem Entfernungsmesser (8) übertragenen Daten erstellt wird, wobei die Steuereinrichtung (23) ferner so konfiguriert ist, dass sie das Buch (11) mit einer konstanten Geschwindigkeit (t) scannt, indem sie den Längsbewegungsmotor (2) steuert, den Motor (4) für die Aufwärts-/Abwärtsbewegung und den Motor (5) für die Kameradrehung über eine Steuerung (34) gemäß der bestimmten Trajektorie, wobei die Zeilenkamera (1) in einem konstanten Abstand und in einem konstanten orthogonalen Winkel in Bezug auf die Oberfläche des Buches (11) zu jedem gegebenen Zeitpunkt gehalten wird.

2. Scanner nach Anspruch 1, wobei der Motor (5) über einen
Zahnriemen (26) mit der Schraube (10) durch eine im Getriebe (29) installierte Drehmutter (28) verbunden ist.

3. Verfahren zum Scannen von antiken Büchern mit dem Scanner nach Anspruch 1, bei dem die Zeilenkamera (1) mit einer eingestellten Geschwindigkeit, die von der gewünschten Bildauflösung abhängt, über das zu scannende Buch (11) bewegt wird, wobei die Bewegung der Zeilenkamera (1) durch eine Trajektorie bestimmt wird, die vor oder während des Scannens unter Verwendung des Entfernungsmessers (8) und der Steuereinrichtung (23) eingestellt wird, wobei das Verfahren die folgenden Schritte umfasst: Messen des Abstandes zwischen dem zu scannenden Buch (11) und der Zeilenkamera (1) über die gesamte Länge und Breite des zu scannenden Objektes mit dem Entfernungsmesser (8)
Übertragen der Entfernungsmesserdaten an die Steuereinrichtung (23); Erzeugen eines Bildes des gescannten Buches (11) mit der Steuereinrichtung (23); Analysieren des erzeugten Bildes und Erstellen einer Karte der Krümmungen des gescannten Buches (11) mit der Steuereinrichtung (23); Bestimmen der Trajektorie der Zeilenkamera (1) zum Scannen des Buches (11) mit der Steuereinrichtung (23) unter Verwendung der erzeugten Karte der Krümmungen des Buches (11), wobei die bestimmte Scannertrajektorie so konfiguriert ist, dass die Zeilenkamera (1) zu jedem Zeitpunkt während des Scannens in einem konstanten Abstand von dem Buch (11) und in einem konstanten orthogonalen Winkel zu der Oberfläche des Buches positioniert bleibt; Übertragen von Steuersignalen von der Steuereinrichtung (23) zu den Längs-, Vertikal- und Rotationsmotoren (2, 4, 5) mittels der Steuerung (34), um das Buch (11) gemäß der bestimmten Trajektorie und mit einer konstanten Geschwindigkeit (t) zu scannen.

## Revendications

1. Un scanner, spécifiquement pour balayer des livres anciens, contenant un boîtier (12) qui abrite un mécanisme de levage (6, 14) sur lequel repose le livre, un cadre (13) fixé au boîtier et supportant des mécanismes de positionnement de caméra (1) sous forme d'une poutre coulissante (7), de courroies dentées (18, 26), d'engrenages (24, 25) et de moteurs (2, 4, 5) pour déplacer la caméra (1) sur le livre (11) à balayer, le scanner étant **caractérisé en ce que**:
La poutre (7) est fixée au cadre (13) ; Un guide de palier coulissant (3) et un moteur pas à pas (4) sont fixés à la poutre (7) ;
Le moteur pas à pas (4) est connecté à une transmission entraînant un engrenage à roue dentée rotative (24) fixé à une extrémité de la poutre (7), et dans lequel à l'extrémité opposée de la poutre (7) un engrenage similaire à rotation libre (25) supporté par un palier est fixé, et dans lequel entre lesdits engrenages (24, 25) une courroie crantée (18) passe dont deux extrémités sont fixées à un palier coulissant (19) fixé à un connecteur (20), le palier coulissant (19) se déplaçant sur le guide de palier coulissant (3) le long d'un axe longitudinal sur le livre (11) à balayer ; Un guide (16) et un moteur (5) sont fixés au connecteur (20) entre les deux, dans lequel le moteur (5) est lié à une vis (10) positionnée dans le guide (16) au moyen d'une courroie crantée (26) qui force un mouvement de levage ou d'abaissement de la vis le long d'un axe vertical au-dessus du livre (11) à balayer, et dans lequel la partie inférieure de la vis (10) est fixée à un connecteur (17), auquel sont fixés des arbres coulissants (9) passant à travers le guide (16) pour stabiliser le mouvement forcé par la vis ;
Le connecteur (17) loge un palier pour arbre (21), à une extrémité duquel est fixée une caméra linéaire (1), et à l'autre extrémité duquel est fixé un moteur pas à pas (2) pour faire tourner la caméra (1) ; le scanner comprenant en outre :
Un télémètre (8) fixé au cadre (13) et positionné pour mesurer la distance entre le livre en cours de balayage et la caméra linéaire sur toute la longueur et la largeur du livre (11) ; des moyens de commande (23) connectés au télémètre (8) et configurés pour déterminer une trajectoire de la caméra linéaire (1) pour balayer le livre (11) en utilisant une carte de courbure de livre créée à partir des données transférées par le télémètre (8), les moyens de commande (23) étant en outre configurés pour balayer le livre (11) à une vitesse constante (t) en commandant le moteur de mouvement longitudinal (2), le moteur de mouvement haut-bas (4) et le moteur de rotation de caméra (5) via un contrôleur (34) selon la trajectoire déterminée maintenant la caméra linéaire (1) à une distance constante et à un angle orthogonal constant par rapport à la surface du livre (11) à n'importe quel moment donné.

2. Le scanner selon la revendication 1, dans lequel le moteur (5) est relié au moyen de la courroie crantée (26) à la vis (10) par un écrou rotatif (28) installé dans l'engrenage (29).

3. Une méthode de balayage de livres anciens avec le scanner selon la revendication 1, déplaçant la caméra linéaire (1) sur le livre (11) à balayer à une vitesse définie en fonction de la résolution d'image souhaitée, dans laquelle le mouvement de la caméra linéaire (1) est déterminé par une trajectoire définie au préalable ou pendant le balayage en utilisant le télémètre (8) et les moyens de commande (23), la méthode comprenant les étapes de : mesure de la distance entre le livre (11) en cours de balayage et la caméra linéaire (1) sur toute la longueur et la largeur de l'objet balayé avec le télémètre (8) ;
transfert des données de télémètre vers les moyens de commande (23); formation d'une image du livre balayé (11) avec les moyens de commande (23), analyse de l'image formée et création d'une carte des courbures du livre balayé (11) avec les moyens de commande (23) ; détermination de la trajectoire de la caméra linéaire (1) pour balayer le livre (11) avec les moyens de commande (23) en utilisant la carte créée des courbures du livre (11), dans laquelle la trajectoire de balayage déterminée est configurée pour maintenir la caméra linéaire (1) positionnée à une distance constante du livre (11) et à un angle orthogonal constant par rapport à la surface du livre à tout moment pendant le balayage ; transmission des signaux de commande à partir des moyens de commande (23) aux moteurs longitudinal, vertical et de rotation (2, 4, 5) au moyen du contrôleur (34) pour balayer le livre (11) selon la trajectoire déterminée et à une vitesse constante (t).
